# EUROPEAN PATENT SPECIFICATION

(11) **EP 1 845 697 B1**
(45) Date of publication and mention of the grant of the patent: **07.05.2014**
(21) Application number: 06024521.4
(22) Date of filing: 27.11.2006
(51) Int. Cl.: H04M 1/725, H04L 12/58, H04M 3/42

(54) **Method for using an instant messenger in a mobile terminal and device using the same**
Verfahren zur Verwendung einer Instant-Messenger in einem Mobilendgerät und Vorrichtung dafür
Méthode d'utilisation de messagerie instantanée dans un terminal mobile, et appareil associé

(30) Priority: 10.04.2006 KR 20060032402
(43) Date of publication of application: 17.10.2007
(73) Proprietor: Samsung Electronics Co., Ltd., Suwon-si, Gyeonggi-do, 443-742 (KR)
(72) Inventor: Kim, Hyung-Jin, Yeongtong-gu, Suwon-si, Gyeonggi-do (KR); Kang, Chang-Taek, Yeongtong-gu, Suwon-si, Gyeonggi-do (KR)
(74) Representative: Nederlandsch Octrooibureau

(56) References cited:
- WO-A1-2004/056137
- WO-A1-2005/017770
- US-A1- 2004 078 448
- US-A1- 2004 204 068

## Description

### BACKGROUND OF THE INVENTION

### Field of the Invention:

The present invention relates to a method for using an instant messenger in a mobile terminal, a device and computer readable media therefor. More particularly, the present invention relates to a method, device and computer readable media for facilitating the use of an instant messenger in a mobile terminal.

### Description of the Related Art:

The mobile communications environment has been developed to enhance the capability of the mobile communication terminal from simple voice communication to various additional uses such as real time video communication and DMB (Digital Multimedia Broadcasting) reception. Among these various uses, the mobile terminal can provide the user with instant message services. The instant message services enable the user to transmit and receive audio or video data files as well as character data in real time during voice communication. Such instant message communication is achieved through an instant message program commonly named instant messenger. However, in spite of such various advantages, instant message service has not achieved widespread use because the user must carry out a complicated and time consuming procedure for its execution in a mobile terminal.

Accordingly, there is a need for an improved mobile terminal device, a method and computer readable media for using an instant messenger which simplifies execution and use of the instant messenger.

### SUMMARY OF THE INVENTION

Exemplary embodiments of the present invention address at least the above problems and/or disadvantages and provide at least the advantages described below. Accordingly, an aspect of the present invention to provide a method, device and computer readable media for facilitating the use of an instant messenger in a mobile terminal.

According to an aspect of the present invention, a method for using an instant messenger in a mobile terminal is provided according to claim 1.

According to another aspect of the present invention, a device for enabling the user of a mobile terminal to more easily use an instant messenger is provided according to claim 6.

WO2005/017770 a1 discloses a system for integrating an address book application with an instant messaging application in a mobile station is provided. An instant messaging database may be used to store instant messaging data, the instant messaging data including instant messaging contacts and instant messaging (IM) presence information to indicate whether the instant messaging contacts may currently be accessed by the instant messaging application. WO2005/017770 does not disclose steps of executing an instant messenger compatible with said instant messenger address when the instant messenger is selected by a user;
and performing instant message communication with a distant party designated by said instant messenger address.

US2004078448 discloses a system and method for integrating instant messaging (IM) services and email services are described. In one embodiment, an email message is received and an IM chat session is automatically initiated from the email message. In other embodiments, the initiation of the IM chat session may be subject to certain programmable criteria. US2004078448 does not disclose steps of executing an instant messenger compatible with said instant messenger address when the instant messenger is selected by a user; and performing instant message communication with a distant party designated by said instant messenger address.

### BRIEF DESCRIPTION OF THE DRAWINGS

The above and other objects, features and advantages of the present invention will become more apparent from the following detailed description when taken in conjunction with the accompanying drawing in which:
FIG. 1 is a block diagram illustrating an exemplary instant message system;
FIG. 2 is a block diagram illustrating an exemplary mobile terminal of the present invention;
FIG. 3 is a flowchart illustrating the steps of performing instant message communication according to a first exemplary embodiment of the present invention;
FIGS. 4A to 4C illustrate a procedure of performing instant message communication according to the first exemplary embodiment of the present invention;
FIG. 5 is a flowchart illustrating the steps of performing instant message communication according to a second exemplary embodiment of the present invention; and
FIGS. 6A to 6C illustrate a procedure of performing instant message communication according to the second exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters claimed in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness. Exemplary embodiments of the present invention will now be described herein below with reference to the accompanying drawings.

According to exemplary embodiments of the present invention, a method, device and computer readable medium are presented which combine the known functionality of mobile terminal messaging with an instant messaging function which has heretofore been complicated and time consuming to use. The exemplary method, device and computer readable media coordinate voice communication and text messaging capabilities conventionally used in mobile terminals, with the functionality of instant messaging that has heretofore been more commonly used in computers and related networks.

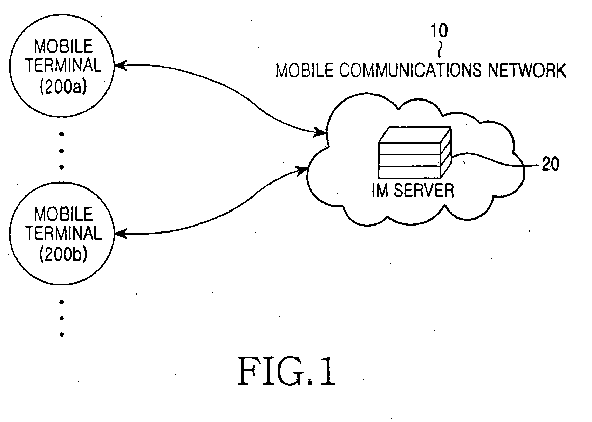

Referring to Fig. 1, the instant message system comprises a mobile communications network 10 for providing a voice and data communications environment for mobile terminals 200a and 200b, and an IM (Instant Message) server 20 for transferring instant messages between the mobile terminals 200a and 200b. The IM server 20 cooperates with the mobile communications network 10 to provide users with an instant message communications environment using an instant messenger. The mobile communications network 10 provides users with the mobile communications environment through various communication protocols including CDMA-2000, 1x EV-DO, WIBRO, HSDPA and the like. According to an exemplary embodiment of the present invention, the mobile communications network 10 provides voice and instant message communications environments for the mobile terminals.

According to a first exemplary embodiment of the present invention, a microprocessor controls a mobile terminal to communicate with a distant party's mobile terminal by using an instant messenger function if the user simply selects the instant messenger address of the distant party. In this case, the instant messenger address may be included with the telephone number information of the distant party that may be registered in the phone book of the user's mobile terminal. By simply selecting the instant messenger address of the distant party, the exemplary embodiment alleviates the complication and time consumption which was problematic with the prior art.

According to a second exemplary embodiment of the present invention, a microprocessor may control a mobile terminal to perform instant message or voice communication with a distant party according to the user's selection of the instant messenger function or voice communication function from the telephone number information of the distant party. In this case, voice communication includes conventional voice communication commonly used by mobile terminals, while the instant message communication includes the use of the instant messenger function according to the distant party's response to the user's request during voice communication.

In addition, the microprocessor controls the mobile terminal to display a menu allowing a user to accept or reject the distant party's request for the instant message communication received during voice communication. Upon receipt of the request, the microprocessor controls the mobile terminal to continue voice communication or perform instant message communication with the distant party by using the instant messenger according to the user's rejection or acceptance of the distant party's request.

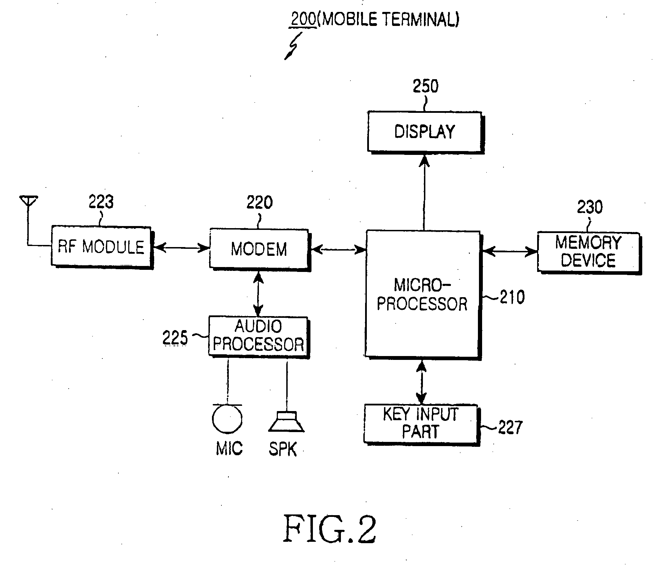

Describing the structure of an exemplary mobile terminal in connection with Fig. 2, a microprocessor 210 preferably controls all functions and modes of the mobile terminal 200 according to the various key input signals entered by a key input part 227. RF module 223 comprises an RF transmitter for modulating and amplifying the frequency of a transmitted signal and an RF receiver for demodulating and low-noise amplifying the frequency of a received signal. A modem 220 is to transform the digital signals from the microprocessor 210 into the corresponding analog signals delivered to the RF module 223, or the analog signals from the RF module into the corresponding digital signals delivered to the microprocessor 210.

The audio processor 225 comprises a data codec for processing packet data and an audio codec for processing audio signals such as voice signals. The audio processor 225 converts the digital audio signals from the modem 220 into the corresponding analog signals delivered to a speaker, or the analog audio signals from a microphone into the corresponding digital signals delivered to the modem 220. The audio processor may be a separate unit or a built-in element of the microprocessor 210. A key input device part 227 includes the keys for inputting information on numbers and characters and the keys for setting various functions.

A memory device 230 comprises a program memory and a data memory. The program memory is to store the programs for controlling the general operations of the mobile terminal 200, including a program for controlling the device in accordance with the exemplary embodiments. According to an exemplary embodiment of the present invention, the memory device 230 stores a phone book storing the telephone information and instant message address of at least one distant party. In an exemplary case, the telephone information is the personal information containing the name and the telephone number of the distant party. The memory device, as a computer readable medium, may comprise ROM (for example MROM, PROM, EPROM, EEPROM and the like), RAM (for example DRAM, SRAM, NVRAM, MRAM and the like), or an external device. Further, other examples of a computer readable medium for storing program code to perform the functions of the present invention as described herein include, but are not limited to, floppy disks, magnetic tapes, optical data storage devices, CD-ROMs, a network accessible storage device or location, carrier waves (such as data transmission via the Internet via a wired or wireless transmission path, and the like. Furthermore, the program of the invention may be downloadable or distributed on medium for acquisition and storage on a mobile terminal.

A display 250 may consist of an LCD (Liquid Crystal Display), an OLED (Organic Light Emitting Diodes) or the like, and display various information generated by the mobile terminal 200. In this case, the display may include a touch screen to serve as an input device for controlling the mobile terminal 200.

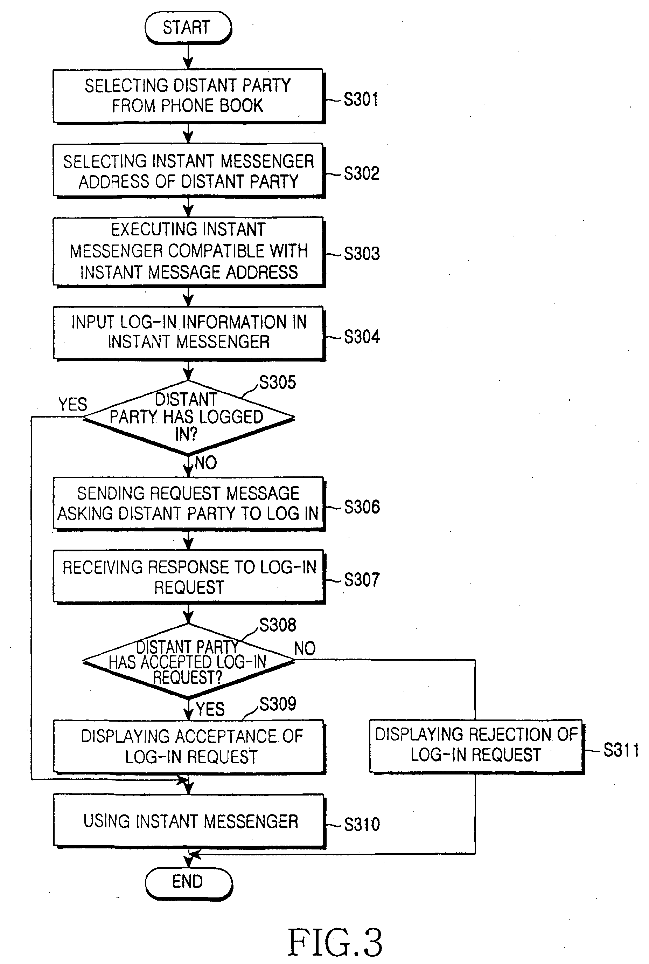

Hereinafter the process of performing the instant message communication in accordance with an exemplary embodiment of the present invention will be described in connection with Figs. 3 to 6.

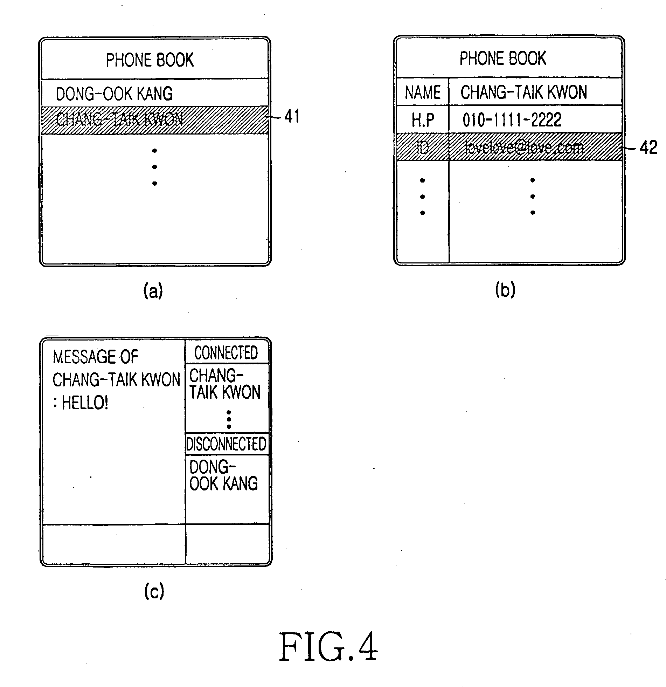

FIG. 3 illustrates the steps of performing instant message communication, and Figs. 4A to 4C illustrate a procedure of performing instant message communication, according to a first exemplary embodiment of the present invention. Beginning at step S301, when a user desires to perform instant message communication with a distant party, the user selects the distant party 41 from the phone book list as shown in Fig. 4A. Based on the selection, the microprocessor 210 controls the mobile terminal to display the telephone information of the distant party stored in the phone book as shown in Fig. 4B.

In step S302, the user selects the instant messenger address 42 of the distant party from the telephone information as shown in Fig. 4B. The microprocessor 210 then executes in step S303 an instant messenger compatible with the instant messenger address 42. The instant messenger compatible with the instant messenger address may comprise an instant messaging protocol, program or client included in the mobile terminal 200, for example a protocol stored within memory device 230. Alternatively, the instant messenger compatible with the instant messenger address may comprise one or more of instant messaging protocols or programs included in the IM server 20. In addition, the mobile terminal 200 can store multiple instant messaging protocols, programs or clients and be programmed in accordance with the present invention to select one that is most compatible with the distant party. In this exemplary embodiment, the microprocessor 210 may execute a compatible instant messenger not limited by the kind of the instant messenger address (for example, the domain name indicated after @ ) such as IRC (Internet Relay Chatting), MSN messenger or the like, instead of the particular one supporting the instant messenger address 42.

The instant messenger being executed in step S303, the microprocessor 210 in step S304 automatically inputs the log-in information of the user in the instant messenger. In this case, if the log-in information of the user (for example, ID and password) has not been stored in the memory device 230, the microprocessor 210 asks the user to input the log-in information, which may then be stored in the memory device 230.

Then in step S305, the microprocessor 210 determines whether the distant party 41 as shown in Fig. 4A has logged-in to the instant messenger. This is achieved by using the log-in information of the distant party 41 received from the instant messenger of the distant party or the IM server 20.

If in step S305 it is determined that the distant party 41 is not logged-in, the microprocessor 210 sends, in step S306, a request message asking the distant party 41 to log-in. The request message has a character message format (for example, Short Messaging Service (SMS), Enhanced Messaging Service (EMS) or Multimedia Messaging Service (MMS)) containing at least one of the instant messenger address of the user and the kind of the instant messenger to be commonly used by both the user and the distant party 41.

After receiving, in step S307, a response from the distant party's mobile terminal to the user's request message, the microprocessor 210 determines whether the distant party's response is an acceptance or rejection of the log-in request in step S308. The response has a character message format (for example, SMS, EMS or MMS) representing the information of the acceptance or rejection.

If in step S308 it is determined that the response represents the acceptance by the distant party of the log-in request to the instant messenger, the microprocessor 210 displays in step S309 a message indicating that the distant party 41 has accepted the log-in request.

Accordingly, if the distant party 41 has already logged-in to the instant messenger in step S305, or accepts the log-in request in step S309, the microprocessor 210 controls the mobile terminal to allow the user to perform instant message communication with the distant party 41 by using the instant messenger in step S310 as shown in Fig. 4C. This enables the user to share written communication and multimedia files with the distant party through the instant messenger. At the same time, each user may see the other's face through a video camera (not shown) attached to the mobile terminal.

In accordance with the exemplary embodiments of the present invention, the terminals 200a and 200b are programmed to operate as either a calling party or a called party (in other words, distant party) as described herein. The user device 200b of the distant party, in accordance with the exemplary embodiment, allows the distant user to accept or reject the request for instant messaging. After accepting or rejecting the request for instant messaging, the distant party's terminal sends the result to the user's terminal. Based on the received result, the exemplary embodiment of the invention allows the user's terminal to begin instant messaging. Further, the distant party's terminal can commence instant messaging if it accepts the calling party's request.

Alternatively, if the response to the log-in request message received in the step S307 represents the rejection of the log-in request, the microprocessor 210 controls in step S311 the user's mobile terminal to display a message indicating that the distant party 41 has rejected the log-in request.

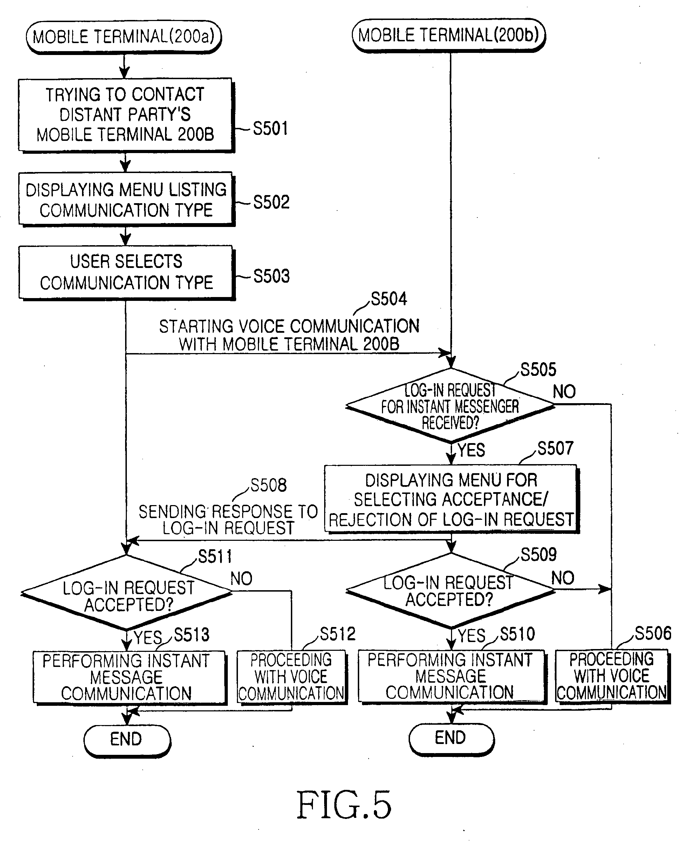

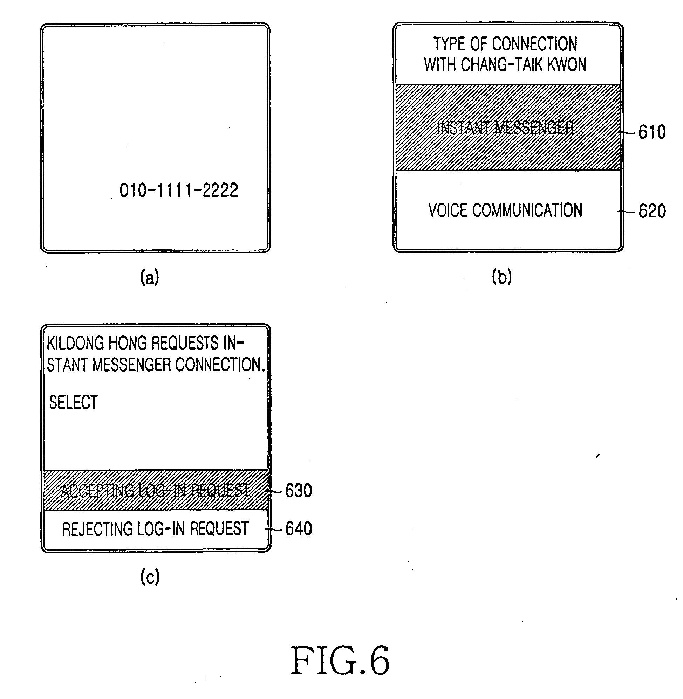

Fig. 5 illustrates the steps of performing the instant message communication, and Figs. 6A to 6C illustrate a procedure of performing instant message communication according to a second exemplary embodiment of the present invention. Describing this embodiment, the microprocessor of the user's mobile terminal 200a is referred to as the user's microprocessor, and that of the distant party's mobile terminal 200b as the distant party's microprocessor.

If the user's mobile terminal 200a tries to contact the distant party's mobile terminal 200b in step S501 as shown in Fig. 5, the user's microprocessor controls in step S502 the mobile terminal to display a menu for the user to select voice communication 620 or the use of an instant messenger 610 as shown in Fig. 6B. One way the user may contact the distant party's mobile terminal 200b in step S501 is to input hard or soft keys, which may be, for example, entering the telephone number of the distant party's mobile terminal as shown in Fig. 6A, selecting the name of the distant party from the phone book, entering a shortcut key shortcutting the telephone number of the mobile terminal 200b and the like. In the menu displayed in step S502 as shown in Fig. 6B, the use of instant messenger 610 includes performing voice communication with the distant party's mobile terminal 200b, sending, by the user's mobile terminal 200a, a log-in request to the distant party's mobile terminal 200b and beginning the instant message communication with the distant party upon receiving acceptance of the log-in request from the distant party. Alternatively, the voice communication 620 listed in the menu as shown in Fig. 6B includes conventional voice communication between the user and distant party.

If a connection type from the menu in the step S502 is selected in step S503, the user's microprocessor begins voice communication with the distant party's mobile terminal 200b in step S504. In this case, if the connection type selected in step S503 is the voice communication 620, the user's microprocessor does not share separate data with the distant party's mobile terminal 200b during voice communication. Alternatively, if the connection type selected in step S503 is the use of the instant messenger 610, the user's microprocessor performs instant message communication directly illustrated in first exemplary embodiment of the present invention or sends a log-in request message asking the distant party to log-in to the instant messenger during voice communication. The log-in request is a written message in a format such as SMS, EMS, MMS and the like, generated upon selecting the use of the instant messenger 610. The log-in message includes at least one of the instant messenger type, the user's instant messenger address and the user's instant messenger nickname.

Meanwhile, the distant party's microprocessor checks in step S505 for the reception of a log-in message from the user's mobile terminal 200a upon starting the voice communication. If the step S505 does not detect the reception of a log-in message, the distant party's microprocessor continues the voice communication with the user's mobile terminal in step S506.

Alternatively, if the log-in request to the instant messenger is detected in the step S505, the distant party's microprocessor controls the mobile terminal 200b to display a menu for the distant party to select in step S507 the acceptance 630 or rejection 640 of the log-in request. After selecting the acceptance or rejection of the log-in request in the step S507, the distant party's microprocessor sends the result to the user's mobile terminal 200a in step S508. The result is the response to the log-in request detected in the step S505. Meanwhile, the distant party's microprocessor checks in step S509 the selection made by the distant party in the step S507. If it is determined that the distant party has rejected the log-in request, the distant party's microprocessor proceeds to step S506 to proceed with the voice communication.

If the step S509 shows the acceptance of the log-in request to the instant messenger, the distant party's microprocessor controls the mobile terminal 200b to perform the instant message communication with the user's mobile terminal 200a in step S510. To this end, the distant party's microprocessor executes the instant messenger to automatically log-in with the log-in information of the distant party of the mobile terminal 200b in the step S510. In this case, the distant party's microprocessor executes the instant messenger with or without terminating the voice communication if necessary. For example, if the voice communication is performed using VoIP (Voice over IP), the distant party's microprocessor need not terminate the voice communication.

Meanwhile, the microprocessor of the user's mobile terminal 200a checks, in step S511, the response to the log-in request received from the distant party's mobile terminal 200b. If the step S511 shows that the distant party has accepted the log-in request, the user's microprocessor controls its mobile terminal 200a to perform instant message communication with the distant party's mobile terminal 200b in step S513. To this end, the user's microprocessor executes the instant messenger to automatically log-in with the log-in information of the user of the mobile terminal 200a in the step S513. Likewise as in the previous case, the user's microprocessor executes the instant messenger with or without terminating the voice communication if necessary. Alternatively, if it is determined in step S511 that the distant party has rejected the log-in request, the user's microprocessor continues to step S506 to proceed with voice communication.

As described above, the present invention provides a menu for the user to select instant message communication and/or voice communication, so that simply selecting the instant messenger address automatically carries out all the necessary steps for using the instant messenger. The invention thereby enables the user to enjoy ready and quick instant message communication without the complexity and time consumption of the prior art. While the invention has been shown and described with reference to a certain exemplary embodiment thereof, it will be understood by those skilled in the art that various changes in form and details may be made therein without departing from the scope of the invention as defined by the appended claims.

## Claims

1. A method for using an instant messenger in a mobile terminal, comprising:
executing an instant messenger compatible with an instant messenger address when the instant messenger address is selected by a user;
and
performing instant message communication with a distant party designated by said instant messenger address,
wherein performing instant message communication comprises:
logging-in to said instant messenger by automatically inputting log-in information when the instant messenger is executed; and
performing said instant message communication with said distant party.

2. The method as claimed in Claim 1, wherein said instant messenger address is previously registered in a phone book of said mobile terminal.

3. The method as claimed in Claim 2, wherein said instant messenger address is included in telephone number information of said distant party previously registered in said phone book of said mobile terminal.

4. The method as claimed in Claim 1, further comprising:
determining if said distant party has logged-in to said instant messenger;
sending a log-in request requesting said distant party to perform a log-in if it is determined that the distant party has not logged-in; and
receiving a response indicating that said distant party has performed a log-in or not.

5. The method as claimed in Claim 4, further comprising informing a user of the distant party's rejecting the log-in request if the received response indicates that the distant party won't logged-in.

6. A device for instant messaging, comprising:
a microprocessor arranged to execute an instant messenger compatible with said instant messenger address when the instant messenger address is selected by a user, and
to perform instant message communication with a distant party designated by said instant messenger address, wherein performing instant message communication comprises:
logging-in to said instant messenger by automatically inputting log-in information when the instant messenger is executed; and
performing said instant message communication with said distant party.

7. A device as claimed in Claim 6, further including a memory for storing a phone book containing instant messenger addresses.

8. A device as claimed in Claim 6 wherein said microprocessor is arranged to control said instant messenger to be automatically executed if the user sends or receives a request for using an instant messenger to or from the distant party.

## Patentansprüche

1. Verfahren zum Verwenden eines Sofortnachrichtenprogramms in einem Mobilendgerät, das Folgendes umfasst:
Ausführen eines Sofortnachrichtenprogramms, das mit einer Sofortnachrichtenprogrammadresse kompatibel ist, wenn die Sofortnachrichtenprogrammadresse durch einen Benutzer ausgewählt ist;
und
Durchführen von Sofortnachrichtenkommunikation mit einem entfernten Teilnehmer, der durch die Sofortnachrichtenprogrammadresse bezeichnet ist,
wobei Durchführen von Sofortnachrichtenkommunikation Folgendes umfasst:
Anmelden beim Sofortnachrichtenprogramm durch automatisches Eingeben von Anmeldeangaben, wenn das Sofortnachrichtenprogramm ausgeführt wird; und
Durchführen der Sofortnachrichtenkommunikation mit dem entfernten Teilnehmer.

2. Verfahren nach Anspruch 1, wobei die Sofortnachrichtenprogrammadresse vorher in einem Telefonbuch des Mobilendgerätes registriert ist.

3. Verfahren nach Anspruch 2, wobei die Sofortnachrichtenprogrammadresse in Rufnummernangaben des entfernten Teilnehmers beinhaltet ist, die vorher im Telefonbuch des Mobilendgerätes registriert sind.

4. Verfahren nach Anspruch 1, das ferner Folgendes umfasst:
Ermitteln, ob sich der entfernte Teilnehmer beim Sofortnachrichtenprogramm angemeldet hat;
Senden einer Anmeldeaufforderung, die den entfernten Teilnehmer auffordert, eine Anmeldung vorzunehmen, wenn ermittelt worden ist, dass sich der entfernte Teilnehmer nicht angemeldet hat; und
Empfangen einer Antwort, die anzeigt, ob der entfernte Teilnehmer eine Anmeldung vorgenommen hat oder nicht.

5. Verfahren nach Anspruch 4, das ferner Informieren eines Benutzers über das Abweisen der Anmeldeaufforderung durch den entfernten Teilnehmer umfasst, wenn die empfangene Antwort anzeigt, dass sich der entfernte Teilnehmer nicht anmelden wird.

6. Gerät für den Austausch von Sofortnachrichten, das Folgendes umfasst:
einen Mikroprozessor, der ausgelegt ist, ein Sofortnachrichtenprogramm auszuführen, das mit der Sofortnachrichtenprogrammadresse kompatibel ist, wenn die Sofortnachrichtenprogrammadresse durch einen Benutzer ausgewählt ist; und Sofortnachrichtenkommunikation mit einem entfernten Teilnehmer durchzuführen, der durch die Sofortnachrichtenprogrammadresse bezeichnet ist, wobei Durchführen von Sofortnachrichtenkommunikation Folgendes umfasst:
Anmelden beim Sofortnachrichtenprogramm durch automatisches Eingeben von Anmeldeangaben, wenn das Sofortnachrichtenprogramm ausgeführt wird; und
Durchführen der Sofortnachrichtenkommunikation mit dem entfernten Teilnehmer.

7. Gerät nach Anspruch 6, das ferner einen Speicher zum Speichern eines Telefonbuches beinhaltet, das Sofortnachrichtenprogrammadressen enthält.

8. Gerät nach Anspruch 6, wobei der Mikroprozessor ausgelegt ist, das Sofortnachrichtenprogramm derart zu steuern, dass es automatisch ausgeführt wird, wenn der Benutzer eine Aufforderung zum Verwenden eines Sofortnachrichtenprogramms zum oder vom entfernten Teilnehmer sendet oder empfängt.

## Revendications

1. Procédé d'utilisation d'une messagerie instantanée dans un terminal mobile, comprenant :
l'exécution d'une messagerie instantanée compatible avec une adresse de messagerie instantanée lorsque l'adresse de messagerie instantanée est sélectionnée par un utilisateur ;
et
l'exécution d'une communication de message instantané avec un correspondant distant désigné par ladite adresse de messagerie instantanée,
dans lequel l'exécution d'une communication de message instantané comprend :
la connexion à ladite messagerie instantanée en entrant automatiquement des informations de connexion lorsque la messagerie instantanée est exécutée ; et
l'exécution de ladite communication de message instantané avec ledit correspondant distant.

2. Procédé selon la revendication 1, dans lequel ladite adresse de messagerie instantanée est préalablement enregistrée dans un annuaire dudit terminal mobile.

3. Procédé selon la revendication 2, dans lequel ladite adresse de messagerie instantanée est incluse dans des informations de numéro de téléphone dudit correspondant distant préalablement enregistrées dans ledit annuaire dudit terminal mobile.

4. Procédé selon la revendication 1, comprenant en outre :
la détermination si ledit correspondant distant est connecté à ladite messagerie instantanée ;
l'envoi d'une demande de connexion demandant au dit correspondant distant d'effectuer une connexion s'il est déterminé que le correspondant distant n'est pas connecté ; et
la réception d'une réponse indiquant que ledit correspondant est connecté ou pas.

5. Procédé selon la revendication 4, comprenant en outre la notification à un utilisateur que le correspondant distant a rejeté la demande de connexion si la réponse reçue indique que le correspondant ne se connecte pas.

6. Dispositif de messagerie instantanée, comprenant :
un microprocesseur agencé pour exécuter une messagerie instantanée compatible avec ladite adresse de messagerie instantanée lorsque l'adresse de messagerie instantanée est sélectionnée par un utilisateur, et pour exécuter une communication de message instantané avec un correspondant distant désigné par ladite adresse de messagerie instantanée, dans lequel l'exécution d'une communication de message instantané comprend :
la connexion à ladite messagerie instantanée en entrant automatiquement des informations de connexion lorsque la messagerie instantanée est exécutée ; et
l'exécution de ladite communication de message instantané avec ledit correspondant distant.

7. Dispositif selon la revendication 6, comprenant en outre une mémoire pour stocker un annuaire contenant des adresses de messagerie instantanée.

8. Dispositif selon la revendication 6, dans lequel ledit microprocesseur est agencé pour commander à ladite messagerie instantanée de s'exécuter automatiquement si l'utilisateur envoie une demande d'utilisation d'une messagerie instantanée au correspondant distant ou en reçoit une de celui-ci.
